# EUROPEAN PATENT SPECIFICATION

(11) **EP 0 986 523 B1**
(45) Date of publication and mention of the grant of the patent: **10.04.2002**
(21) Application number: 98924908.1
(22) Date of filing: 27.05.1998
(51) Int. Cl.: C04B 35/111, C04B 35/622

(54) **ALUMINUM OXIDE-BASED MOLDING COMPOUND**
FORMBARE ZUSAMMENSETZUNG AUF DER BASIS VON ALUMINIUMOXID
MASSE A MOULER A BASE D'OXYDE D'ALUMINIUM

(30) Priority: 04.06.1997 US 869053
(43) Date of publication of application: 22.03.2000
(73) Proprietor: Honeywell International Inc., Morristown, New Jersey 07962-2245 (US)
(72) Inventor: BEHI, Mohammad, Lake Hiawatha, NJ 07034 (US); BALLARD, Clifford, Palmer, Jr., Lebanon, NJ 08833 (US); BURLEW, Joan, V., Rockaway, NJ 07866 (US); FANELLI, Anthony, Morris Plains, New Jersey 07950 (US)
(74) Representative: Hucker, Charlotte Jane
(86) International application number: US9810752
(87) International publication number: WO9855424

(56) References cited:
- WO-A-93/23346
- GB-A- 1 605 274
- US-A- 3 615 763
- US-A- 5 424 257

## Description

### BACKGROUND OF THE INVENTION

### 1. Field of the Invention

This invention relates to aluminum oxide molding compounds for shaping pans from ceramic powders; and more particularly, to high aluminun oxide-based molding compounds for forming high quality, net shape and near net shape, complex parts that exhibit excellent homogeneity and strength in the green (unfired) state and that can be readily fired without experiencing the cracking, distortion and shrinkage problems associated with prior art sintered products.

### 2. Description of the Prior Art

The family of aluminum oxide-based materials, having aluminum oxide as the major constituent in combination with specific concentrations of other metal oxide compounds, are among the most important and widely used ceramic materials in industrial and consumer applications. Most of the components manufactured for these markets are made using powder pressing and slip casting forming processes.

One objective of any forming method is to produce green parts which can be sintered to a shape reproducible to close dimensional tolerances, free from defects. During green - forming and sintering, cracks, distortions and other defects can arise due to the shrinkage associated with the particle consolidation processes. It is generally recognized that these defect-producing processes are mitigated by producing homogeneous green bodies having adequate green strength

Another objective of shape-forming methods is to produce articles having net shape, eliminating or minimizing the need for downstream operations, such as machining, to obtain final part dimensions. Dry pressing involves compaction of powder in a die. Among the various shape-forming methods dry pressing, in particular, requires additional downstream processing in the form of machining and diamond grinding to attain intricate shapes, non-symmetrical geometrical formats and close tolerances. In slip casting a liquid suspension of ceramic powder is "de-watered" in a porous mold, producing a powder cake in the shape dictated by the mold. Although slip casting has the attribute of producing net shape parts, the method is considered relatively slow for the manufacture of complex parts in high volume.

US-A-5424257 discloses a ceramic moulding composition comprising aluminium oxide having a purity of at least 99.5%, and, based on the amount of aluminium oxide, 0.2 to 2.5 wt.% magnesium oxide, 1 to 6 wt.% silicon dioxide and 0.1 to 2.5 wt.% calcium oxide.

US-A-3615763 discloses sintered ceramic articles consisting of 94 to 65.5 wt.% aluminium oxide and a mixture of silicon dioxide, calcium oxide and magnesium oxide.

WO-A-9323346 discloses a sintered aluminium oxide product containing 90 to 98 wt.% aluminium oxide, with the balance being composed of silicon dioxide, calcium oxide and magnesium oxide.

GB 1605274 discloses a composite material comprising 85 to 99.5 wt.% aluminium oxide grains bound together by a vitreous phase composed of an alkaline-earth silico-aluminate, which may contain magnesium oxide and/or calcium oxide.

Injection molding is recognized as a premier forming method for complex, ceramic shapes. Injection molding overcomes the limitations of other forming methods, being capable of rapidly producing net shape, complex parts in high volume. However, the full potential of the injection molding method for the manufacture of complex, ceramic parts has not been realized because of the limited availability of ready moldable feedstocks that contain the ceramic powders in correct proportion and the necessary binder, liquid carrier and other additives in a form for immediate use in commercially available injection molding machines.

One commercially available feedstock for molding aluminum oxide ceramics is composited using a binder based on polyacetal polymers (metal and ceramic product brochures, BASF Corporation). However, this material requires molding at high pressures above about 69 mPa (10,000 psi) and debinding in special furnaces designed to contain gaseous acidic species that catalyze the debinding process. It is recognized that high molding pressures can contribute to excessive abrasion and wear of the metallic components in contact with the molding compound, resulting in metal contamination which can deteriorate the visual and/or functional properties of the ceramic products. The use of high pressures can also lead to distortions occurring in the body during debinding and sintering due to the potentially high differential pressures that can be experienced by the part during molding. It is therefore advantageous to be able to mold ceramic formulations at low pressure.

The current invention provides a ready moldable feedstock compound that obviates the need for high molding pressures and special debinding furnaces. The molding compounds disclosed herein use water as the liquid carrier and can be molded at low machine pressures below about 6.9 mPa (1,000 psi). Furthermore molded parts are dried before sintering by evaporation of the water, and the lengthy and complex debinding step, typical of polymer-based molding systems, is eliminated.

### BRIEF DESCRIPTION OF THE DRAWINGS

The invention will be more fully understood and further advantages will become apparent when reference is made to the following detailed description and the accompanying drawings, in which:

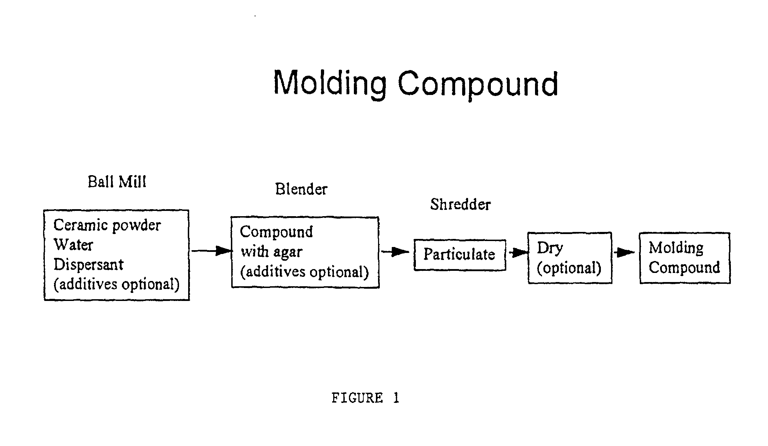

Fig. 1 is a schematic representation of the basic steps of one embodiment of the invention;
Fig. 2 is a graphical representation of measured outer diameter dimensions on 3-Hole Insulators injection molded using the aluminum oxide-based molding compounds disclosed herein (the "3oclk in the legend of the graph refers to a particular orientation used for the measurements); and

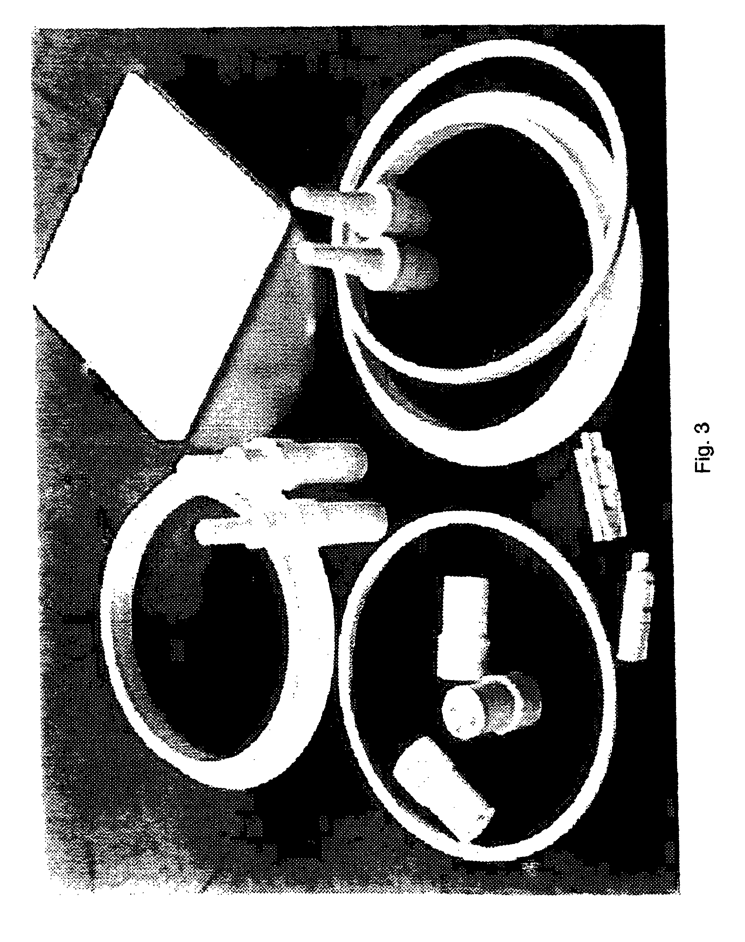

Fig. 3 is a pictorial representation of examples of green and fired aluminum oxide-based ceramic components made in conventional injection molding machines using the molding compounds of the present invention.

### SUMMARY OF THE INVENTION

The present invention provides an aqueous, high aluminum oxide-based molding composition as defined in claim 1.

The invention also provides a method for compounding the constituent materials of said composition into a homogeneous mixture and format that is useful for manufacture of ceramic articles by injection molding, said method being defined in claim 7.

The invention also provides a method for producing the molding compound comprising the steps of ball milling, compounding, drying (optional) and shredding the material into a particulate format.

### DETAILED DESCRIPTION OF THE INVENTION

The invention provides a ceramic molding compound consisting of aluminum oxide as the major phase with lesser amounts of other sintering-promoting metal inorganic compounds, water, binder (selected from class of polysaccharides) and minor amounts of other additives that improve the processibility of the molding feedstocks. The invention further provides a method for producing a ready-moldable feedstock from the constituent ceramic powders, binder, carrier and other processing aids. It is customary to represent the ceramic constituents of a fired ceramic body in terms of the constituent metal oxide compounds irrespective of the actual phases present after firing. Using this convention the ceramic constituents of the molding compounds disclosed herein may be represented by the formula Al2O3ₐSiO2_{b}MgO_{c}CaO_{d} wherein a ranges from 80 to 100 wt%, b ranges from 0 to 15 wt%, c ranges from 0 to 5 wt% and d ranges from 0 to 5 wt%. In the present invention, one preferred molding compound in terms of the constituent metal oxides is composed of a = about 94 wt%, b = about 4.5 wt%, c = about 1% and d = about 0.5 wt%. The composition of the preferred molding compound in terms of the starting ceramic powders is 90.01 wt% aluminum oxide, 6.24 wt% aluminosilicate clay, 1.41 wt% dolomite (magnesium calcium carbonate) and 2.34 wt% talc. An example of a second preferred molding compound in terms of starting ceramic powders contains 90.01 wt% aluminum oxide, 6.24 wt% aluminosilicate clay, 1.41 wt% calcium carbonate and 2.34 wt% talc.

The molding compound provides a binder which provides the mechanism for allowing the fluid material to set in a mold and be removed as a self-supporting structure. In the present invention this role is served by a compound derived from the category of polysaccharides known as agaroids. An agaroid has been defined as a gum resembling agar but not meeting all of the characteristics thereof (See H.H. Selby et al., "Agar", *Industrial Gums*, Academic Press, New York, NY, 2nd ed., 1973, Chapter 3, p. 29). As used herein, however, agaroid not only refers to any gums resembling agar, but also to agar and derivatives thereof such as agarose. An agaroid is employed because it exhibits rapid gelation within a narrow temperature range, a factor which can dramatically increase the rate of production of articles. The preferred gel-forming materials are those which are water soluble and comprise agar, agarose, or carrageenan, and the most preferred gel-forming materials consist of agar, agarose, and mixtures thereof.

The molding compound also provides a liquid carrier to facilitate transport of the molding compound along the barrel of an injection molding machine to a mold. Water is the most preferred liquid carrier in the molding compounds because it ideally serves the dual purpose of being a solvent for the gel forming binder and liquid carrier for the solid constituents in the mixture. In addition, because of its low boiling point, water is easily removed from the molded part prior to and/or during firing. The amount of water is chosen to confer the molding compounds with the essential rheological characteristics for proper behavior in the injection molding machine. The proper amount of water is between about 10 wt% and 30 wt% of the mixture with amounts between about 15 wt% and 20 wt% being preferred.

The molding compound may also contain a variety of additives which can serve any number of useful purposes. Additives that have been found to be very useful in the present molding compounds comprise dispersants, pH control agents, biocides and gel strength enhancing agents (e.g., metal borate compounds like calcium borate, magnesium borate and zinc borate). Biocides may be used to inhibit bacterial growth in the molding compounds, especially if they are to be stored for long periods of time.

It is well-known that use of dispersants and pH control can greatly improve the rheology and processibiliy of ceramic suspensions. In the present case dispersants based on polyacrylate and polymethacrylate polymer backbones have been found useful in improving the processibility of the aluminum oxide-based compositions, the amount of dispersant in the molding compound being about 0.2wt% to 1 wt% and preferably 0.4 wt% to 0.6 wt% based on the ceramic powders. Similarly, tetramethylammonium hydroxide has been found useful for controlling the pH of the suspensions, the useful pH range being about 8.8 to 11 and preferably 9.3 to 9.9.

The molding compounds of the present invention combine the ceramic powders, liquid carrier, binder and processing aids in a ready-moldable form. A preferred composition in terms of the constituent compounds is 74.82 wt% aluminum oxide, 5.19 wt% aluminosilicate clay, 1.94 wt% talc, 1.17 wt% dolomite, 0.166 wt% dispersant, 0.175 wt% tetramethylammonium hydroxide, 0.035 wt% biocide and 16.5 wt% water.

The invention also provides a method for combining all of the various constituents of the molding compounds into a homogeneous mixture which will produce homogeneous molded bodies that can be fired free of cracks and other defects. Raw material ceramic powders are frequently highly agglomerated and require deagglomeration before they can be manufactured into useful ceramic articles, free of cracks, distortions and other defects. Of the various available methods ball milling has been found convenient and useful for producing the aqueous-based molding compounds disclosed herein, the powders being simultaneously deagglomerated and homogenized in the aqueous medium. The useful concentration range for ball milling the ceramic powders is 50 wt% to 85 wt%, the preferable range being between 65 wt% and 80 wt%.

In another embodiment of the invention, components of the ceramic formulation commonly referred to as "plastics", such as aluminosilicate clays, may be dispersed separately using a high speed stirring blade and combined with the ball milled, "non-plastic" slip ingredients, such as aluminum oxide, in a subsequent step, e.g., during compounding.

Compounding of the ceramic suspension with the binder can be done in any number of efficient mixers, e.g., a sigma mixer or planetary-type mixer. The biocide may be blended into the composition at the compounding stage of the process or optionally near the end of the ball milling cycle. During compounding the blend is heated in the range 75° C to 95° C and preferably between 80° C and 90° C for a period of about 15 min to 120 min and preferably between 30 min and 60 min.

The molding compound must be in a suitable form for charging an injection molding machine. In the present invention the compounded, homogeneous mixture is allowed to cool below the gel point of the gel-forming agent (<37° C) and removed from the blender. Thereafter it is shredded into a particulate format using a rotating cutter blade typically used in food processing. The shredded format can be fed directly into the hopper of an injection molding machine. The shredded feedstock may be dried to a particular molding solids by evaporation, by exposure of the material to the atmosphere, until the desired moisture level is obtained. The useful solids levels in the molding compounds are in the range 75 wt% to 88 wt% and preferably between 82 wt% and 85 wt%.

The fired products produced by the molding compounds of the present invention can be very dense, net or near net shape products. The physical properties of densified ceramic from one preferred molding compound containing 94 wt% aluminum oxide (referred to as "AS194") have been found to be excellent for a variety of mechanical and electrical insulator applications as summarized in Table 1.

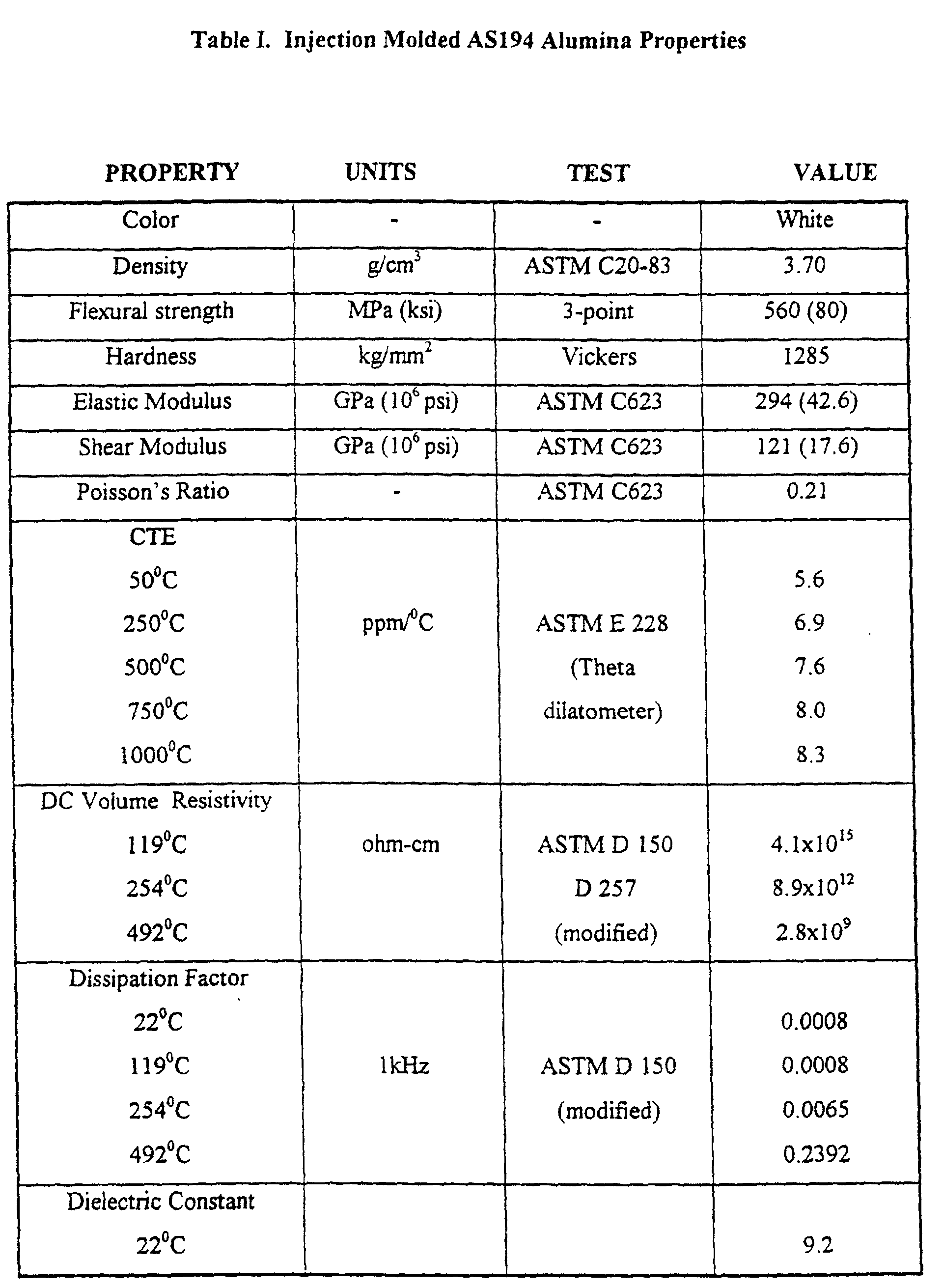

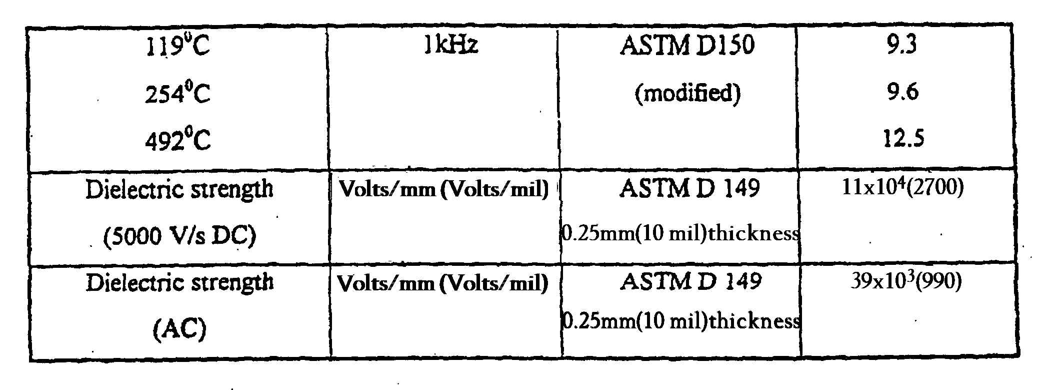

The following examples are presented to provide a more complete understanding of the invention.. As used in the examples, the term "wt % solids" includes all residual material after removal of volatiles at 15.0° C. Injection molding pressures quoted refer to machine hydraulic pressure. Unless specified otherwise, the ceramic firing temperature is 1550°C. The specific techniques, conditions, materials, proportions and reported data set forth to illustrate the principles and practice of the invention are exemplary and should not be construed as limiting the scope of the invention.

### Example 1

A molding slip was prepared from 2520.3 g Al₂O₃ (Alcan C901), 87.4 g air floated kaolin (United Clays), 87.4 g Georgia kaolin (J.M. Huber), 65.5 g talc (Whittaker, Clark and Daniels), 39.5 g dolomite (Ohio Lime and Stonelite), 28 g ammonium polyacrylate (40 wt% solution, Vanderbilt Laboratories), 23.6 g TMA (tetramethylammonium hydroxide, 25 wt% solution, Alfa Inorganics) and 916.2 g D.I. water. The slip was ball milled for 24 h and 3351 g was recovered and transferred to a sigma mixer. During heating and agitation of the slip in the sigma blender, 74.7 g of agar (S-100, Frutarom Meer Corp.), 0.67 g methyl-p-hydroxy benzoate (Penta Mfg) and 0.50 g propyl-p-hydroxy benzoate (Penta Mfg) were added incrementally. The total mixing time was 1h and the final temperature reached 96°C (205°F). After the material was allowed to cool to room temperature, it was shredded into particulates using a food processor (Kitchen Aid KSM90).

Before being molded the shredded feedstock was dried to a desired solids level by exposing a loose bed of the material to the atmosphere. Samples were taken periodically and analyzed using a moisture balance (Ohaus Corp.). A part termed "3-Hole Insulator" was molded on a Boy 22M injection molding machine running in automatic mode. The fired part is cylindrical in shape, nominally 2.2 cm (0.85") in length with three holes, nominally 0.25 cm (0.1") diameter, running lengthwise. A step divides the part into a larger diameter shoulder, 1.1 cm (0.45") O.Dx 0.89 cm (0.35") length and a smaller diameter shoulder, 0.89 cm (0.35") O.D.x 1.3 cm (0.5") length. Following molding, the parts were dried at ambient conditions and fired at 1550°C.

### Example 2

A molding slip was prepared using the procedures of Example 1 except that only one clay was used, 174.8 g air floated kaolin and 39.5 g calcium carbonate (Specialty Minerals) in place of dolomite. The recovered slip that was transferred to the sigma mixer amounted to 3,050 g. Sixty-eight grams of agar and 1.19 g total ofthe methyl- and propyl- biocide mixture were blended into the molding compound mixture being agitated and heated in the sigma blender. The material was shredded and dried to 82.5 wt% solids. 3-Hole Insulators were molded at 250 psi, dried and fired as in Example 1. An average density of 3.716±0.0138 g/cm³ was determined on 28 fired parts. Measurements were taken on the large and small, outer diameters of 28 fired parts. The average of these measurements was: large diameter: 1.1 cm ± 0.003 cm (0.4300" ± 0.00117"); small diameter: 0.96 cm ± 0.004 cm (0.3784"±0.00168").

### Example 3

This example regresents a scale-up of the molding compound preparation described in Example 1. A slip was prepared from 81.009 kg aluminum oxide, 2.808 kg air floated kaolin, 2.808 Georgia kaolin, 2.106 kg talc, 1.269 kg dolomite, 18.756 kg D.I. water, 0.900 kg ammonium polyacrylate and adjusted to pH 10 with TMA. After ball milling, the slip was transferred to a planetary type blender where it was blended with 2.715 kg agar, 0.0181 kg methyl-p-hydroxy benzoate and 0.0136 kg propyl-p-benzoate while being agitated and heated. Mixing was continued for 1h after the blender reached a final temperature of 95°C. The material was put into feedstock form by shredding.

### Example 4

The feedstock from Example 3 was used to mold 3-Hole Insulators on a Boy 22M molding machine on automatic cycle. The material was molded at 83.8 wt% solids and 250 psi pressure. The average density of 25 fired parts was 3.685 ±0.0257 g/cm³. Measurements were taken on the large and small outer diameters of 26 parts. The average of these measurements was: large diameter: 0.4380"±0.000894"; small diameter: 0.3862"±0.001047".

### Example 5

3-Hole insulators were molded using the molding compound from Example 3 following 17 days storage at ambient temperature. The material was molded at 83.8 wt% solids and 250 psi pressure. The average density of 23 fired parts was 3.694 ±0.0284 g/cm³. Measurements were taken on the large and small outer diameters of 23 parts. The average of these measurements was: large diameter: 0.4393"±0.00143"; small diameter: 0.3860"±0.00122".

### Example 6

3-Hole insulators were molded using the molding compound from Example 3 following 62 days storage at ambient temperature. The material was molded at 84.0 wt% solids and 250 psi pressure. The average density of 20 fired parts was 3.702 ±0.0170 g/cm³. Measurements were taken on the large and small outer diameters of 22 parts. The average of these measurements was: large diameter: 0.4392"±0.00190"; small diameter: 0.3873"±0.00087".

### Example 7

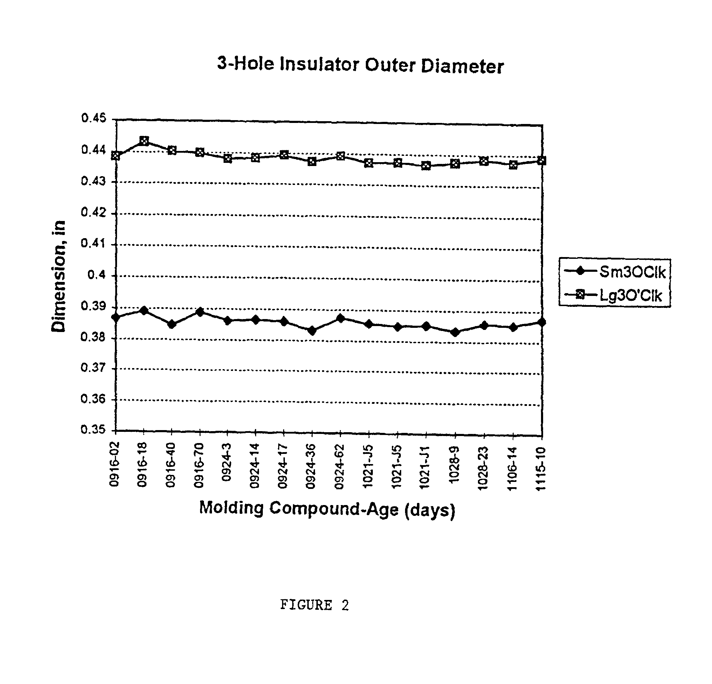

The large and small diameters of 3-Hole Insulators molded with a series of molding compounds prepared as described in Example 3 were measured. The results are shown graphically in Figure 2 wherein each data point represents an average of measurements on from 10-30 parts. Each molding compound preparation is designated by a preceding 4 digit number followed by a dash and a 2 digit number which reveals the age of the molding compound at the time of molding.

### Example 8

This example illustrates various parts molded with material as prepared in Example 1. The die dimensions for a rectangular block were 6.58 cm x 5.05 cm x 0.71 cm (2.59" x1.99"x0.28") in thickness. The average shrinkage for 30 blocks molded at 82 wt% solids and 17 x 10⁵ Pa (250 psi) was 18.59±0.09% x 18.67±0.12% x 19.70±0.32%, respectively, and the average density 3.70±0.01 g/cm³. A plate bearing the letters "AlliedSignal" (AlliedSignal logo) grooved into one face had die dimensions of 5.94 cm x 5.94 cm x 0.41 cm (2.34"x2.34" x0.16") thickness. Plates were molded on a Boy 22M injection molding machine at pressures ranging from 14 x 10⁵ Pa to 24 x 10⁵ Pa (200 to 350 psi.) The average density of 12 fired plates was 3.64±0.03 g/cm³.
A thin circular disk molded at 17 x 10⁵ Pa (250 psi) measured 6.1 cm (2.4") O.D.x 0.11 cm (0.045") thickness in the green state and 5.3 cm (2.1") O.D.x 0.08 cm (0.033") thickness after firing.
A part exemplifying adjacent thick-thin cross sections was molded at 20 x 10⁵ Pa (300 psi). The part is made up of five steps transitioning in thickness from nominally 2.5 cm (1") at the base to 0.25 cm (0.1") at the top. The width and height of each step is about 5.1 cm by 1.3 cm (2" by 0.5") and the nominal weight about 44 g. Fired parts were obtained with the steps remaining in line, free from droop.
A hemispherical part was molded at 17 x 10⁵ - 20 x 10⁵ Pa (250 - 300 psi) on a 77 x 10³ kg (85 ton) Cincinnati injection molding machine. The thickness, diameter and dome height of the green part are 0.25 cm x 12.6 cm x 3.8 cm (0.1" x 4.97" x 1.5"), respectively. The average weight of 12 molded parts was 137.77±0.81 g and the fired density 3.68±0.02 g/cm³. A hollow cylindrical part called an oxygen sensor was molded on Boy 22M and Boy 15S injection molding machines. The average green weight of 11 parts was 9.18±0.04 g and average fired density 3.72 ± 0.02 g/cm³. A large plate, die dimensions, 11.6 cm x 11.6 cm x 1.0 cm (4.6"x4.6"x0.4") thickness was molded on a 77 x 10³ kg (85 ton) Cincinnati injection molding machine.
The average green weight of 11 parts was 357.14±1.43 g and typical dimensions of a fired plate 9.8 cm x 9.8 cm x 0.89 cm (3.87"x3.87"x0.35") thickness.

### Example 9

The procedures of Example 1 were followed except that the aluminosilicate clay ingredients were dispersed separately using a high speed stirring blade and then combined with the ball milled slip in the sigma blender. The molding compound from this alternate preparation procedure was used to mold the AlliedSignal logo plates described in Example 8.

## Claims

1. An aqueous molding composition for forming complex-shaped parts by injection molding comprising:
a) a moulding compound defined essentially by the formula (Al₂O₃)ₐ (SiO₂)_{b}(MgO)_{c}(CaO)_{d}, wherein "a" ranges from about 80 to 100 wt %, "b" ranges from 0 to about 15 wt%, "c" ranges from 0 to about 5 wt% and "d" ranges from 0 to about 5 wt%,
b) a liquid carrier, and
c) a binder selected from the group of polysaccharides consisting of agaroids.

2. A molding composition as recited in claim 1, defined essentially by the formula (Al₂O₃)₉₄ (SiO₂)_{4.5}(MgO)₁(CaO)_{0.5}.

3. A molding composition as recited by claim 1 or claim 2, further including from about 0.2 to 1 wt% of a dispersant based on a polyacrylate or polymethacrylate polymer backbone.

4. A molding composition as recited in any preceding claim, the moulding compound consisting essentially of 90.01 wt% aluminum oxide, 6.24 wt% aluminosilicate clay, 1.41 wt% magnesium calcium carbonate and 2.34 wt% talc.

5. A molding composition as recited by any preceding claim, further including an additive selected from the group consisting of dispersants, pH control agents, biocides, gel strength enhancing agents and mixtures thereof.

6. A molding composition as recited by any preceding claim, wherein the liquid carrier is water.

7. A method for blending constituents of a molding composition as defined in claim 1 into a homogeneous mixture, comprising the steps of:
a) mixing together ceramic powders to produce a composition as defined essentially by the formula (Al₂O₃)ₐ(SiO₂)_{b}(MgO)_{c}(CaO)_{d} wherein "a" ranges from about 80 to 100 wt%, "b" ranges from 0 to about 15 wt%, "c" ranges from 0 to about 5 wt% and "d" ranges from 0 to about 5 wt%;
b) ball milling the ceramic powders in the presence of an aqueous medium to produce a ceramic suspension, the ceramic powders comprising about 50 to 85 wt% of the medium; and
c) compounding the ceramic suspension with a binder selected from the group of polysaccharides consisting of agaroids.

8. A method as recited by claim 7, further comprising the step of compounding the ceramic suspension with a biocide to produce a compounded, homogeneous mixture.

9. A method as recited by claim 7 or claim 8, wherein during compounding said suspension is heated to a temperature ranging from about 75°C to 95°C for a time period ranging from about 15 to 120 min.

10. A method as recited by claim 9, wherein said temperature ranges from about 80°C to 90°C and said time ranges from about 30 to 60 min.

11. A method as recited by any of claims 7 to 10, wherein said mixture includes a gel-forming agent, and said method further comprising the step of cooling said mixture to a temperature below the gel point of the gel-forming agent and removing said mixture from the blender.

12. A method as recited by any of claims 7 to 11, further comprising the step of shredding said mixture to form a particulate material.

13. A method as recited by any of claims 7 to 12, further comprising the step of drying said particulate material until it exhibits a solids level ranging from about 75 to 88 wt%.

14. A method as recited by claim 13, wherein said particulate material is dried until it exhibits a solids level ranging from about 82 to 85 wt%.

## Patentansprüche

1. Wäßrige Formmassenzusammensetzung zum Formen komplex geformter Teile durch Spritzgießen, enthaltend:
a) eine Formmasse, die im wesentlichen durch die Formel (Al₂O₃)ₐ(SiO₂)_{b}(MgO)_{c}(CaO)_{d}, worin "a" im Bereich von etwa 80 bis 100 Gew.-%, "b" im Bereich von 0 bis etwa 15 Gew.-%, "c" im Bereich von 0 bis etwa 5 Gew.-% und "d" im Bereich von 0 bis etwa 5 Gew.-% liegt, definiert ist,
b) einen flüssigen Träger und
c) ein Bindemittel aus der aus Agaroiden bestehenden Polysaccharid-Gruppe.

2. Formmassenzusammensetzung nach Anspruch 1, die im wesentlichen durch die Formel (Al₂O₃)₉₄(SiO₂)_{4,5}(MgO)₁(CaO)_{0,5} definiert ist.

3. Formmassenzusammensetzung nach Anspruch 1 oder 2, die außerdem auch noch etwa 0,2 bis 1 Gew.-% eines Dispergiermittels auf der Basis einer Polyacrylatoder Polymethacrylat-Polymerhauptkette enthält.

4. Formmassenzusammensetzung nach einem der vorhergehenden Ansprüche, die im wesentlichen aus 90,01 Gew.-% Aluminiumoxid, 6,24 Gew.-% Alumosilicat-Ton, 1,41 Gew.-% Magnesiumcalciumcarbonat und 2,34 Gew.-% Talk besteht.

5. Formmassenzusammensetzung nach einem der vorhergehenden Ansprüche, die außerdem auch noch ein Additiv aus der Gruppe bestehend aus Dispergiermitteln, den pH-Wert regulierenden Mitteln, Bioziden, die Gelstärke erhöhenden Mitteln und Gemischen davon enthält.

6. Formmassenzusammensetzung nach einem der vorhergehenden Ansprüche, in der es sich bei dem flüssigen Träger um Wasser handelt.

7. Verfahren zum Mischen von Bestandteilen einer Formmassenzusammensetzung nach Anspruch 1 unter Herstellung einer homogenen Mischung, bei dem man:
a) Keramikpulver so zusammenmischt, daß sich eine Zusammensetzung ergibt, die im wesentlichen durch die Formel (Al₂O₃)ₐ(SiO₂)_{b}(MgO)_{c}(CaO)_{d}, worin "a" im Bereich von etwa 80 bis 100 Gew.-%, "b" im Bereich von 0 bis etwa 15 Gew.-%, "c" im Bereich von 0 bis etwa 5 Gew.-% und "d" im Bereich von 0 bis etwa 5 Gew.-% liegt, definiert ist;
b) die Keramikpulver in Gegenwart eines wäßrigen Mediums in der Kugelmühle mahlt, wobei man eine Keramiksuspension erhält, wobei die Keramikpulver etwa 50 bis 85 Gew.-% des Mediums ausmachen; und
c) die Keramiksuspension mit einem Bindemittel aus der aus Agaroiden bestehenden Polysaccharid-Gruppe compoundiert.

8. Verfahren nach Anspruch 7, bei dem man außerdem auch noch die Keramiksuspension mit einem Biozid compoundiert, wobei man eine compoundierte, homogene Mischung erhält.

9. Verfahren nach Anspruch 7 oder 8, bei dem man beim Compoundieren die Suspension über einen Zeitraum im Bereich von etwa 15 bis 120 min auf eine Temperatur im Bereich von etwa 75°C bis 95°C erhitzt.

10. Verfahren nach Anspruch 9, bei dem die Temperatur im Bereich von etwa 80°C bis 90°C und der Zeitraum im Bereich von etwa 30 bis 60 min liegt.

11. Verfahren nach einem der Ansprüche 7 bis 10, bei dem die Mischung einen Gelbildner enthält und bei dem man außerdem auch noch die Mischung auf eine Temperatur unterhalb des Gelpunkts des Gelbildners abkühlt und die Mischung aus der Mischapparatur austrägt.

12. Verfahren nach einem der Ansprüche 7 bis 11, bei dem man außerdem auch noch die Mischung zu einem teilchenförmigen Material zerkleinert.

13. Verfahren nach einem der Ansprüche 7 bis 12, bei dem man außerdem auch noch das teilchenförmige Material trocknet, bis es einen Feststoffgehalt im Bereich von etwa 75 bis 88 Gew.-% aufweist.

14. Verfahren nach Anspruch 13, bei dem man das teilchenförmige Material trocknet, bis es einen Feststoffgehalt im Bereich von etwa 82 bis 85 Gew.-% aufweist.

## Revendications

1. Composition à mouler aqueuse destinée à former des pièces de forme complexe par moulage par injection, comprenant:
a) un mélange à mouler défini essentiellement par la formule (Al₂O₃)ₐ(SiO₂)_{b}(MgO)_{c}(CaO)_{d}, dans laquelle "a" s'échelonne d'environ 80 à 100% en poids, "b" s'échelonne de 0 à environ 15% en poids, "c" s'échelonne de 0 à environ 5% en poids et "d" s'échelonne de 0 à environ 5% en poids,
b) un véhicule liquide, et
c) un liant choisi dans le groupe des polysaccharides constitués d'agaroides.

2. Composition à mouler selon la revendication 1, définie essentiellement par la formule (Al₂O₃)₉₄ (SiO₂)_{4,5}(MgO)₁(CaO)_{0,5}.

3. Composition à mouler selon la revendication 1 ou la revendication 2, contenant en outre d'environ 0,2 à 1% en poids d'un dispersant à base d'une chaîne principale polymère de polyacrylate ou de polyméthacrylate.

4. Composition à mouler selon l'une quelconque des revendications précédentes, le mélange à mouler étant essentiellement constitué de 90,01% en poids d'oxyde d'aluminium, 6,24% en poids d'argile aluminosilicate, 1,41% en poids de carbonate de magnésium et de calcium et 2,34% en poids de talc.

5. Composition à mouler selon l'une quelconque des revendications précédentes, contenant en outre un additif choisi dans le groupe constitué par les dispersants, les agents de régulation du pH, les biocides, les agents renforçant la tenue du gel et leurs mélanges.

6. Composition à mouler selon l'une quelconque des revendications précédentes, dans laquelle le véhicule liquide est l'eau.

7. Procédé pour mélanger les constituants d'une composition à mouler selon la revendication 1 afin d'obtenir un mélange homogène, comprenant les étapes consistant à:
a) mélanger des poudres de céramique les unes avec les autres pour produire une composition telle que définie essentiellement par la formule (Al₂O₃)ₐ(SiO₂)_{b}(MgO)_{c}(CaO)_{d}, dans laquelle "a" s'échelonne d'environ 80 à 100% en poids, "b" s'échelonne de 0 à environ 15% en poids, "c" s'échelonne de 0 à environ 5% en poids et "d" s'échelonne de 0 à environ 5% en poids;
b) broyer les poudres de céramique au broyeur à billes en présence d'un milieu aqueux, pour produire une suspension de céramique, les poudres de céramique constituant environ 50 à 85% en poids du milieu; et
c) mélanger la suspension de céramique avec un liant choisi dans le groupe des polysaccharides constitués d'agaroïdes.

8. Procédé selon la revendication 7, comprenant en outre l'étape consistant à mélanger la suspension de céramique avec un biocide pour produire un mélange homogène composé.

9. Procédé selon la revendication 7 ou la revendication 8, dans lequel, durant le mélange, ladite suspension est chauffée à une température s'échelonnant d'environ 75°C à 95°C pendant une durée allant d'environ 15 à 120 min.

10. Procédé selon la revendication 9, dans lequel ladite température s'échelonne d'environ 80°C à 90°C et ladite durée s'échelonne d'environ 30 à 60 min.

11. Procédé selon l'une quelconque des revendications 7 à 10, dans lequel ledit mélange contient un agent formant un gel, et ledit procédé comprend en outre l'étape consistant à refroidir ledit mélange à une température inférieure au point de gel de l'agent formant un gel et à retirer ledit mélange du mélangeur.

12. Procédé selon l'une quelconque des revendications 7 à 11, comprenant en outre l'étape consistant à hacher ledit mélange pour former une matière particulaire.

13. Procédé selon l'une quelconque des revendications 7 à 12, comprenant en outre l'étape consistant à sécher ledit matériau particulaire jusqu'à ce qu'il présente une teneur en matières solides s'échelonnant d'environ 75 à 88% en poids.

14. Procédé selon la revendication 13, dans lequel ledit matériau particulaire est séché jusqu'à ce qu'il présente une teneur en matières solides s'échelonnant d'environ 82 à 85% en poids.
